# FASCICULE DE BREVET EUROPEEN

(11) **EP 2 591 997 B1**
(45) Date de publication et mention de la délivrance du brevet: **19.03.2014**
(21) Numéro de dépôt: 12188906.7
(22) Date de dépôt: 17.10.2012
(51) Int. Cl.: B64C 25/22, B64C 25/30, B64C 25/26

(54) **Procédé de déploiement d'atterrisseurs d'aéronef en mode secours**
Verfahren zum Ausfahren des Fahrwerks eines Luftfahrzeugs im Notfall-Modus
Method for deploying aircraft landing gear in emergency mode

(30) Priorité: 09.11.2011 FR 1160214
(43) Date de publication de la demande: 15.05.2013
(73) Titulaire: Messier-Bugatti-Dowty, 78140 Velizy Villacoublay (FR)
(72) Inventeur: Frank, David, 78140 VELIZY-VILLACOUBLAY (FR)
(74) Mandataire: Parzy, Benjamin Alain

(56) Documents cités:
- EP-A1- 1 914 163
- EP-A1- 2 070 818
- DE-A1-102006 048 399
- FR-A1- 2 827 346

## Description

L'invention est relative à un procédé de déploiement d'atterrisseurs d'aéronef en mode secours.

### ARRIERE-PLAN TECHNOLOGIQUE DE L'INVENTION

Sur les aéronefs, les atterrisseurs sont généralement déployés en mode normal au moyen d'un circuit hydraulique comportant des composants hydrauliques adaptés à travailler en séquence pour déverrouiller et ouvrir les trappes des atterrisseurs, puis déverrouiller et déployer les atterrisseurs, et éventuellement, refermer et reverrouiller au moins certaines des trappes, cf. EP 2 070 818 et EP 1 914 163.

En cas de défaillance du déploiement des atterrisseurs, dû à une défaillance du circuit hydraulique ou d'un organe associé, il est prévu un moyen de secours pour assurer le déploiement des atterrisseurs.

Ce mode secours est très souvent mécanique. Il s'agit d'un actionnement des boîtiers d'accrochage des trappes et des atterrisseurs par des tringles ou des câbles actionnés par le pilote au moyen d'un levier de libération pour libérer les trappes et les atterrisseurs, afin que ceux-ci puissent se déployer sous l'effet de la gravité. Récemment, on a proposé un actionnement secours des boîtiers d'accrochage faisant appel à des actionneurs électriques. Un mode mixte électrohydraulique faisant appel à une pompe entraînée par un moteur électrique qui agit en déverrouillant les boîtiers d'accrochage par pressurisation a également été proposé.

Dans tous les cas, l'actionnement secours constitue un système à part entière, ségrégué du mode normal et nécessitant par conséquent un nombre important d'équipements supplémentaires. Il en résulte une augmentation de masse et une diminution de la fiabilité du système de déploiement des atterrisseurs, ainsi qu'un coût associé élevé.

### OBJET DE L'INVENTION

L'invention a pour objet de proposer un déploiement des atterrisseurs simple et peu coûteux qui peut notamment être utilisé en déploiement secours.

### BREF RESUME DE L'INVENTION

En vue de la réalisation de ce but, on propose un procédé pour actionner en mode secours des boîtiers d'accrochage d'atterrisseurs et de boîtiers d'accrochage de trappes associées d'un aéronef, les boîtiers d'accrochage comportant au moins un port d'alimentation ainsi qu'au moins un organe de déverrouillage opérable lorsque le port est alimenté en fluide sous pression, l'aéronef étant par ailleurs pourvu d'un circuit hydraulique de freinage. Selon l'invention, le procédé consiste à mettre en place sur le circuit de freinage de l'aéronef au moins une dérivation associée à une vanne d'isolation maintenue en mode normal dans un état d'isolation et commandable pour être placée dans un état ouvert dans lequel au moins certains des ports d'alimentation des boîtiers d'accrochage sont alimentés par la dérivation du circuit de freinage.

Or l'on sait que le circuit de freinage est généralement équipé d'un accumulateur formant réserve d'énergie hydraulique et permettant de maintenir la pression dans le circuit de freinage même en cas de défaillance de l'alimentation en pression. On notera que cette réserve d'énergie est de plus en plus surveillée (au moyen de capteurs de pression) pour répondre aux exigences récentes des autorités aéronautiques.

La dérivation et la vanne proposées selon l'invention permettent, lorsque la vanne est fermée, de couper l'alimentation des boîtiers d'accrochage par cette dérivation pour éviter leur déverrouillage intempestif, et, lorsque la vanne est ouverte, de soumettre les actionneurs des boîtiers d'accrochage à la pression entretenue par l'accumulateur du circuit de freinage.

Le volume de fluide consommé par l'organe de déverrouillage des boîtiers d'accrochage lors de son actionnement est minime et ne nécessitera au plus qu'un léger redimensionnement du volume de l'accumulateur du circuit de freinage. Ainsi, on assure un déploiement secours des atterrisseurs au moyen d'un dispositif particulièrement simple et léger, puisque réduit au simple ajout d'une vanne et d'une tuyauterie.

De préférence, lorsque l'aéronef est équipé de premier et deuxième circuits hydrauliques de freinage assurant chacun respectivement une partie du freinage de l'aéronef, on prévoit sur chacun des circuits hydrauliques de freinage une dérivation et une vanne d'isolation, pour connecter respectivement aux premier et deuxième circuits hydrauliques de freinage d'une part les ports d'alimentation des boîtiers d'accrochage des atterrisseurs et trappes associées d'un premier groupe d'atterrisseurs, et d'autre part les ports d'alimentation des boîtiers d'accrochage des atterrisseurs et trappes associées d'un deuxième groupe d'atterrisseurs complémentaire du premier groupe.

En variante, toujours lorsque l'aéronef est équipé de premier et deuxième circuits hydrauliques de freinage assurant chacun respectivement une partie du freinage de l'aéronef, on prévoit sur un seul des circuits hydraulique de freinage une dérivation et une vanne d'isolation pour connecter respectivement aux premier et deuxième circuits hydrauliques de freinage d'une part les ports d'alimentation de secours des boîtiers d'accrochage des trappes, et d'autre part les ports d'alimentation des boîtiers d'accrochage des atterrisseurs.

### DESCRIPTION DES FIGURES

L'invention sera mieux comprise à la lumière de la description qui suit de variantes de réalisation de l'invention, en référence aux figures des dessins annexés parmi lesquelles :
- la figure 1 est une vue schématique des atterrisseurs et des trappes associées d'un aéronef typique ;
- la figure 2 est un schéma d'un boîtier d'accrochage avec un port d'alimentation principal et un port d'alimentation de secours hydrauliques ;
- la figure 3 est un schéma d'un circuit hydraulique d'un aéronef à circuit de freinage unique avec une dérivation selon l'invention pour alimenter les ports d'alimentation de secours des boîtiers d'accrochage ;
- la figure 4 est un schéma d'un circuit hydraulique d'un aéronef à deux circuits de freinage, avec une dérivation selon l'invention pour alimenter les ports d'alimentation de secours des boîtiers d'accrochage ;

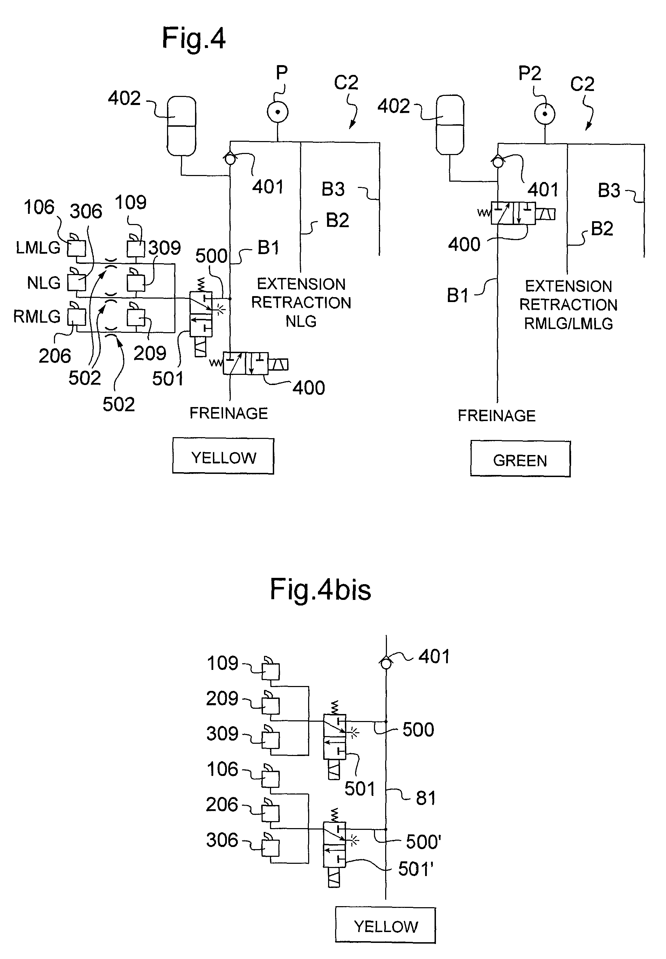

- la figure 4bis est un schéma d'une variante de réalisation du circuit hydraulique de la figure 4 ;

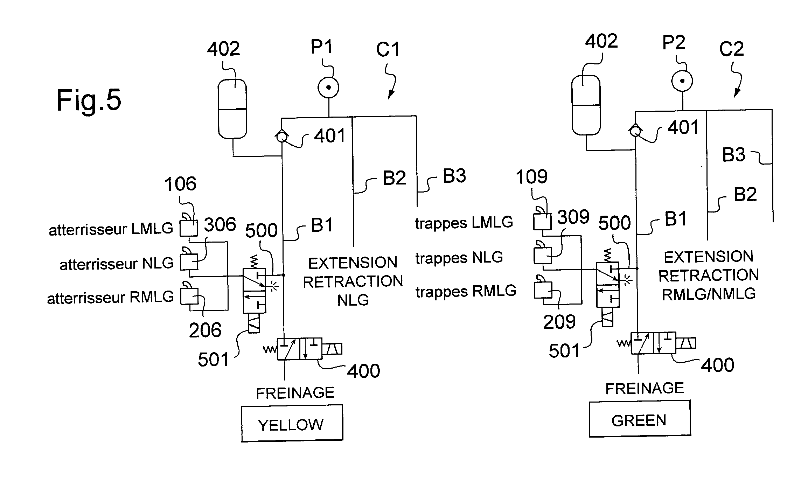

- la figure 5 est un schéma d'un circuit hydraulique d'un aéronef à deux circuits de freinage avec deux dérivations selon l'invention ;

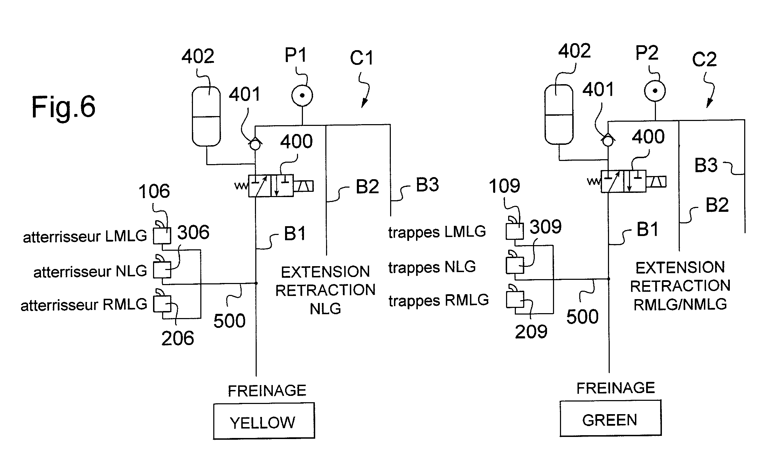

- la figure 6 est une figure analogue à la figure 5 illustrant une variante de mise en oeuvre de l'invention.

### DESCRIPTION DETAILLEE DE MODES DE MISE EN OEUVRE DE L'INVENTION

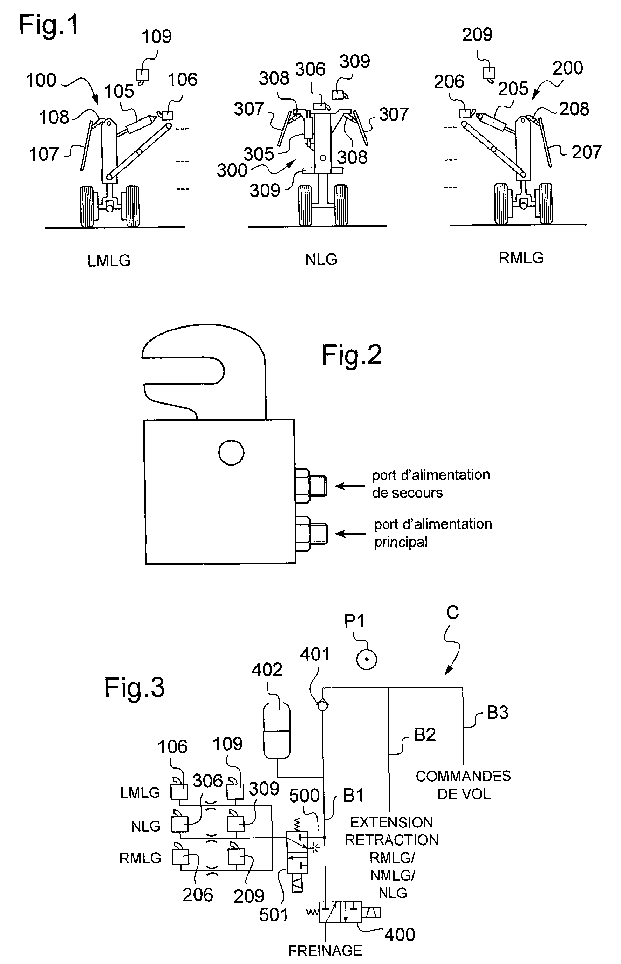

Comme illustré en figure 1, l'invention est ici décrite en relation avec un aéronef comportant deux atterrisseurs principaux 100, 200 (nommés respectivement RMLG et LMLG). Les atterrisseurs principaux sont manoeuvrés par des vérins 105, 205 pour être déployés ou rétractés dans des soutes fermées par des trappes 107, 207 actionnés par des vérins 108, 208. Les atterrisseurs RMLG et LMLG 100, 200 sont maintenus en position rétractée par des boîtiers d'accrochage 106, 206, tandis que les trappes sont maintenues fermées par des boîtiers d'accrochage 109, 209.

L'aéronef comporte par ailleurs un atterrisseur auxiliaire 300 (nommé NLG) manoeuvré par un vérin 305 pour être déployé ou rétracté dans une soute fermée par des trappes 307 actionnées par des vérins 308. L'atterrisseur NLG 300 est maintenu en position rétractée par un boîtier d'accrochage 306, tandis que les trappes sont maintenues fermées par un boîtier d'accrochage 309.

Cette configuration d'atterrisseurs n'est donnée qu'à titre illustratif et ne limite absolument pas la possibilité d'appliquer l'invention à d'autres configurations.

Comme cela est illustré schématiquement à la figure 2, chacun des boîtiers d'accrochage des atterrisseurs 106,206, 306 et chacun des boîtiers d'accrochage des trappes 109, 209, 309 comporte ici deux ports hydrauliques. L'un des ports est prévu pour alimenter un actionneur de déverrouillage principal et qui est alimenté par le circuit d'extension/rétraction de l'aéronef. L'autre des ports est prévu pour alimenter un actionneur de déverrouillage de secours. Cet actionneur de secours est utilisé en cas d'indisponibilité de l'actionneur principal (blocage, non alimentation...). Chacun des actionneurs provoque le déverrouillage du crochet de sorte que celui-ci libère l'élément qu'il maintenait, trappe ou atterrisseur.

Selon l'invention, les actionneurs secours sont alimentés par une dérivation du circuit de freinage de l'invention, fermée par une vanne d'isolation.

Selon un premier mode de mise en oeuvre illustré à la figure 3, l'aéronef comporte un unique circuit hydraulique C, avec une source de pression P (par exemple une pompe entraînée par l'un des propulseurs de l'aéronef). Ici, ce circuit comporte trois branches, respectivement la branche B1 pour assurer respectivement les fonctions de freinage, la branche B2 d'extension/rétraction des atterrisseurs, et la branche B3 pour alimenter les commandes de vol.

La branche B2 assure ici l'extension et la rétraction des atterrisseurs. Y sont branchés les vérins d'actionnement des atterrisseurs 105, 205, 305, ainsi que les vérins d'actionneurs des trappes 108, 208, 308. Y sont également branchés les actionneurs principaux des boîtiers d'accrochage 106, 206, 306 et 109, 209, 309. Des vannes commandées assurent l'alimentation en séquence de tous ces éléments pour garantir que les atterrisseurs ne se déploient que lorsque les trappes sont décrochées et ouvertes. Ceci est bien connu.

La branche de freinage B1 est fermée par une vanne d'isolation 400 qui isole le circuit de freinage et les freins du reste du circuit hydraulique de l'aéronef. Puis la branche B1 comporte un clapet anti-retour 401. Un accumulateur 402 est prévu en aval du clapet anti-retour pour maintenir une pression minimale dans la branche B1. Le clapet anti-retour 401 permet de maintenir l'accumulateur en pression, en cas de défaillance de la pompe P ou de rupture de tuyauterie en amont. Comme cela est bien connu, l'accumulateur 402 forme une réserve d'énergie et joue le rôle d'une source de pression et de débit pour permettre un certain nombre d'actionnements des freins par le pilote au cas où la pompe P serait défaillante. En fonctionnement normal, l'accumulateur 402 est maintenu gonflé par la pompe P.

Selon l'invention, une dérivation 500 est piquée sur la branche B1 en aval du clapet anti-retour 401 pour alimenter tous les actionneurs secours des boîtiers d'accrochage des atterrisseurs 106, 206, 306 et des boîtiers d'accrochage des trappes 109, 209, 309. La dérivation 500 est maintenue fermée en temps normal par une vanne d'isolation 501 qui met les actionneurs secours des boîtiers d'accrochage au retour.

En cas d'impossibilité de décrocher les trappes ou les atterrisseurs à l'aide des actionneurs principaux des boîtiers d'accrochage, il suffit alors d'ouvrir la vanne d'isolation 501 pour admettre dans les actionneurs secours des boîtiers d'accrochage la pression maintenue par l'accumulateur 402. On provoque ainsi le déverrouillage des boîtiers d'accrochage, ce qui permet le déploiement secours des atterrisseurs sous l'effet de la gravité.

On remarquera que, comme auparavant, le décrochage en mode secours des atterrisseurs intervient après le décrochage des trappes grâce à des restricteurs 502 disposés sur les lignes d'alimentation des boîtiers entre chaque boîtier d'accrochage d'atterrisseur et le boîtier d'accrochage de trappes associé, de sorte qu'une séquence d'actionnement est assurée entre le décrochage des trappes et le décrochage des atterrisseurs.

Selon un deuxième mode de mise en oeuvre illustré à la figure 4, l'aéronef comporte deux circuits hydrauliques C1 et C2 (appelés YELLOW et GREEN) ayant chacun leur pompe P1 et P2 entraînées par des propulseurs distincts de l'aéronef. La branche B2 du circuit C1 assure l'extension/rétraction en mode principal de l'atterrisseur auxiliaire 300, tandis que la branche B2 du circuit C2 assure l'extension/rétraction en mode principal des atterrisseurs principaux 100,200.

Selon l'invention, une dérivation 500 est disposée sur la branche de freinage B1 du circuit C1 en aval du clapet anti-retour 401 pour alimenter tous les actionneurs secours des boîtiers d'accrochage des atterrisseurs 106, 206, 306 et des boîtiers d'accrochage des trappes 109, 209, 309.

Ainsi, un seul des circuits de freinage (et donc un seul des accumulateurs) est sollicité pour assurer l'alimentation en pression de tous les actionneurs secours des boîtiers d'accrochage. Selon une variante illustrée à la figure 4bis, la séquence peut être assurée autrement en prévoyant deux vannes d'isolation 501 et 501' équipant deux dérivations 500 et 500' associées respectivement aux boîtiers de trappe 109, 209, 309 et aux boîtiers d'atterrisseurs 106, 206, 306. Il suffit alors de commander en séquence les deux vannes d'isolation 501, 501' pour assurer la séquence d'actionnement entre le décrochage des trappes et le décrochage des atterrisseurs.

Selon un troisième mode de mise en oeuvre illustré à la figure 5, l'aéronef comporte deux circuits hydrauliques C1 et C2 (appelés YELLOW et GREEN) ayant chacun leur pompe P1 et P2 entraînées par des propulseurs distincts de l'aéronef. La branche B2 du circuit C1 assure l'extension/rétraction en mode principal de l'atterrisseur auxiliaire 300, tandis que la branche B2 du circuit C2 assure l'extension/rétraction en mode principal des atterrisseurs principaux 100,200.

Selon l'invention, une dérivation 500 est disposée sur la branche B1 du circuit C1 pour alimenter tous les actionneurs secours des boîtiers d'accrochage des atterrisseurs 106,206, 306, et une dérivation 500 est disposée sur la branche B1 du circuit C2 pour alimenter tous les actionneurs secours des boîtiers d'accrochage des trappes 109, 209, 309.

Selon un aspect particulier de l'invention, celle-ci peut être mise en oeuvre sans forcément ajouter une vanne d'isolation spécifique 501 sur la dérivation 500, selon une variante illustrée à la figure 6. Cette variante est très similaire à celle présentée à la figure 5 à la différence près que la vanne d'isolation 501 sur le circuit de gauche (ou circuit YELLOW) a été supprimée, la fonction d'isolation étant ici assurée directement par la vanne d'isolation de freinage 400 qui sert habituellement à isoler la branche B1 de freinage de secours du circuit YELLOW.

Pour cela, il convient que la dérivation 500 soit piquée sur la branche B1 en aval de la vanne d'isolation de freinage 400. Dans tous les autres exemples illustrés ici, la dérivation 500 est au contraire piquée en amont de la vanne d'isolation de freinage 400, ce qui nécessite la mise en place sur la dérivation 500 d'une vanne d'isolation 500 spécifique.

Ce piquage en aval de la vanne de freinage peut bien sûr s'appliquer à tous les autres exemples illustrés ici.

L'invention n'est pas limitée à ce qui vient d'être décrit, mais englobe au contraire toute variante entrant dans le cadre défini par les revendications.

En particulier, bien que dans les exemples illustrés, les boîtiers comportent des ports d'alimentation principaux et de secours distincts pour alimenter respectivement un actionneur de déverrouillage principal et un actionneur de déverrouillage de secours, de sorte que les chaînes d'actionnement principal et de secours soient totalement ségréguées, l'invention ne se limite pas à cette configuration. On pourra bien entendu appliquer l'invention à un aéronef dont les boîtiers d'accrochage ne comportent qu'un actionneur de déverrouillage pouvant être actionné soit par le port d'alimentation principal, soit par le port d'alimentation de secours.

L'invention s'applique également à un aéronef dont les boîtiers sont équipés d'un seul actionneur et d'un seul port d'alimentation formant à la fois le port d'alimentation principal et le port d'alimentation de secours.

## Revendications

1. Procédé pour actionner en mode secours des boîtiers d'accrochage d'atterrisseurs (106, 206, 306) et de boîtiers d'accrochage de trappes (109, 209, 309) associées d'un aéronef, les boîtiers d'accrochage comportant au moins un port d'alimentation ainsi qu'au moins un organe de déverrouillage opérable lorsque le port est alimenté en fluide sous pression, l'aéronef étant par ailleurs pourvu d'un circuit hydraulique de freinage (B1), **caractérisé en ce que** le procédé comporte la mise en place sur le circuit de freinage de l'aéronef d'au moins une dérivation (500) associée à une vanne d'isolation (400 ; 501) maintenue en mode normal dans un état d'isolation et commandable pour être placée dans un état ouvert dans lequel au moins certains des ports d'alimentation des boîtiers d'accrochage sont alimentés par la dérivation du circuit de freinage.

2. Procédé selon la revendication 1, dans lequel la vanne d'isolation (501) est placée directement sur la dérivation.

3. Procédé selon la revendication 1, dans lequel l'aéronef comporte un unique circuit de freinage, et dans lequel l'unique dérivation mise en place alimente les ports de tous les boîtiers d'accrochage.

4. Procédé selon la revendication 1, dans lequel l'aéronef comporte deux circuits hydrauliques définissant deux circuits de freinage (B1/C1, B1/C2), dans lequel on met en place une unique dérivation sur l'un des circuits de freinage pour alimenter les ports de tous les boîtiers d'accrochage.

5. Procédé selon la revendication 1, dans lequel l'aéronef comporte deux circuits hydrauliques définissant deux circuits de freinage (B1/C1, B1/C2), dans lequel on met en place deux dérivations respectives sur chacun des circuits de freinage pour alimenter, pour l'une des dérivations, les ports des boîtiers d'accrochage des trappes, et pour l'autre des dérivations, les ports des boîtiers d'accrochage des atterrisseurs.

6. Procédé selon la revendication 1, dans lequel l'aéronef comporte deux circuits hydrauliques définissant deux circuits de freinage (B1/C1, B1/C2), dans lequel on met en place deux dérivations respectives sur chacun des circuits de freinage pour alimenter, pour l'une des dérivations, les ports des boîtiers d'accrochage d'atterrisseurs principaux et des boîtiers d'accrochage de trappes associés, et pour l'autre des dérivations, les ports des boîtiers d'accrochage d'un atterrisseur auxiliaire et des boîtiers d'accrochage des trappes associés.

## Patentansprüche

1. Verfahren zum Betätigen von Verriegelungsboxen von Fahrwerken (106, 206, 306) und von Verriegelungsboxen von dazugehörigen Klappen (109, 209, 309) eines Flugzeugs im Hilfsmodus, wobei die Verriegelungsboxen mindestens einen Versorgungsanschluss sowie mindestens ein Entriegelungselement umfassen, das betätigbar ist, wenn der Anschluss mit Druckfluid versorgt wird, wobei das Flugzeug ferner mit einem hydraulischen Bremskreis (B1) versehen ist, **dadurch gekennzeichnet, dass** das Verfahren das Installieren mindestens einer Ableitung (500) an dem Bremskreis des Flugzeugs umfasst, wobei die Ableitung mit einem Absperrventil (400; 501) verbunden ist, das im Normalmodus in einem Sperrzustand gehalten wird und steuerbar ist, um in einen geöffneten Zustand gebracht zu werden, in dem mindestens einige der Versorgungsanschlüsse der Verriegelungsboxen über die Ableitung des Bremskreises versorgt werden.

2. Verfahren nach Anspruch 1, wobei das Absperrventil (501) direkt an der Ableitung angebracht ist.

3. Verfahren nach Anspruch 1, wobei das Flugzeug einen einzigen Bremskreis umfasst und wobei die einzige installierte Ableitung die Anschlüsse aller Verriegelungsboxen versorgt.

4. Verfahren nach Anspruch 1, wobei das Flugzeug zwei Hydraulikkreisläufe umfasst, die zwei Bremskreise (B1/C1, B1/C2) definieren, wobei eine einzige Ableitung an einem der Bremskreise installiert wird, um die Anschlüsse aller Verriegelungsboxen zu versorgen.

5. Verfahren nach Anspruch 1, wobei das Flugzeug zwei Hydraulikkreisläufe umfasst, die zwei Bremskreise (B1/C1, B1/C2) definieren, wobei an jedem der Bremskreise eine Ableitung installiert ist, um über die eine Ableitung die Anschlüsse der Verriegelungsboxen der Klappen und über die andere Ableitung die Anschlüsse der Verriegelungsboxen der Fahrwerke zu versorgen.

6. Verfahren nach Anspruch 1, wobei das Flugzeug zwei Hydraulikkreisläufe umfasst, die zwei Bremskreise (B1/C1, B1/C2) definieren, wobei an jedem der Bremskreise eine Ableitung installiert ist, um über die eine Ableitung die Anschlüsse der Verriegelungsboxen der Hauptfahrwerke und der Verriegelungsboxen der dazugehörigen Klappen und über die andere Ableitung die Anschlüsse der Verriegelungsboxen eines Hilfsfahrwerks und der Verriegelungsboxen der dazugehörigen Klappen zu versorgen.

## Claims

1. A method of actuating undercarriage latching boxes (106, 206, 306) and associated hatch latching boxes (109, 209, 309) of an aircraft in an emergency mode, the latching boxes having at least one feed port and at least one unlatching member that is operable when the port is fed with fluid under pressure, the aircraft also being provided with a hydraulic braking circuit (B1), the method being **characterized in that** it includes connecting at least one tapping circuit (500) to the braking circuit of the aircraft in association with an isolation valve (400; 501) that is kept, in a normal mode, in an isolation state and that can be controlled to be placed in an open state in which at least some of the feed ports of the latching boxes are fed by the tapping circuit connected to the braking circuit.

2. A method according to claim 1, wherein the isolation valve (501) is located directly in the tapping circuit.

3. A method according to claim 1, wherein the aircraft has a single braking circuit, and wherein the single tapping circuit that is connected thereto feeds the ports of all of the latching boxes.

4. A method according to claim 1, in which the aircraft has two hydraulic circuits defining two braking circuits (B1/C1, B1/C2), wherein a single tapping circuit is connected to one of the braking circuits in order to feed the ports of all of the latching boxes.

5. A method according to claim 1, in which the aircraft has two hydraulic circuits defining two braking circuits (B1/C1, B1/C2), wherein two respective tapping circuits are connected to each of the braking circuits, one of them feeding the ports of the hatch latching boxes and the other of them feeding the ports of the undercarriage latching boxes.

6. A method according to claim 1, in which the aircraft has two hydraulic circuits defining two braking circuits (B1/C1, B1/C2), wherein two respective tapping circuits are connected to each of the braking circuits, one of them feeding the ports of the main undercarriage latching boxes and of the associated hatch latching boxes, and the other feeding the ports of the nose undercarriage latching boxes and of the associated hatch latching boxes.
